# EUROPÄISCHE PATENTSCHRIFT

(11) **EP 1 149 012 B1**
(45) Veröffentlichungstag und Bekanntmachung des Hinweises auf die Patenterteilung: **25.09.2002**
(21) Anmeldenummer: 00905009.7
(22) Anmeldetag: 02.02.2000
(51) Int. Cl.: B62D 15/02, G01B 7/30

(54) **VORRICHTUNG ZUM ERFASSEN DER WINKELSTELLUNG DES LENKRADES EINES KRAFTFAHRZEUGS**
DEVICE FOR DETECTING THE ANGLE POSITION OF A MOTOR VEHICLE STEERING WHEEL
DISPOSITIF POUR DETECTER LA POSITION ANGULAIRE DU VOLANT D'UNE AUTOMOBILE

(30) Priorität: 02.02.1999 DE 19904000
(43) Veröffentlichungstag der Anmeldung: 31.10.2001
(73) Patentinhaber: Leopold Kostal GmbH & Co. KG, 58507 Lüdenscheid (DE)
(72) Erfinder: BORGMANN, Uwe, D-45665 Recklinghausen (DE); KÖSTER, Michael, D-44145 Dortmund (DE)
(86) Internationale Anmeldenummer: EP0000845
(87) Internationale Veröffentlichungsnummer: WO00046093

(56) Entgegenhaltungen:
- DE-A- 4 123 781
- DE-A- 19 835 886

## Beschreibung

Die Erfindung bezieht sich auf eine Vorrichtung zum Erfassen der Winkelstellung des Lenkrades eines Kraftfahrzeugs.

Der Lenkwinkel bzw. der Lenkwinkeleinschlag bei Kraftfahrzeugen wird benötigt, um mit diesem Wert etwa ein Fahrdynamikregelsystem beaufschlagen zu können. Ein solches Fahrdynamikregelsystem erhält neben den genannten Lenkwinkelwerten weitere Meßdaten, etwa die Raddrehzahlen oder die Drehung des Fahrzeugs um seine Hochachse. Der absolute Lenkwinkeleinschlag aber auch die Lenkgeschwindigkeit werden benötigt, damit diese Werte zusammen mit den anderen erfaßten Daten durch das Fahrdynamiksystem ausgewertet und zum Steuern von Aktoren, beispielsweise der Bremsen und/oder der Antriebskraftübertragung eingesetzt werden können.

Lenkwinkelsensoren werden in einer Vielzahl unterschiedlicher Meßprinzipien ausgeführt. So ist z.B. aus der DE 43 00 663 C1 ein Lenkwinkelsensor bekannt geworden, bei dem auf dem Kreisumfang verteilte Lichtschranken eine auf einem Blendenring realisierte Codierung abtasten. Mit diesem Sensor ist eine Erfassung der absoluten Winkelstellung bezogen auf eine volle Umdrehung des Lenkrades möglich.

Ebenfalls bezogen auf eine volle Umdrehung erfaßt der aus der der DE 40 22 837 A1 bekannte optoelektronische Lenkwinkelsensor die Winkelstellung des Lenkrades. Der in diesem Dokument offenbarte Lenkwinkelsensor besteht aus zwei parallel und mit Abstand zueinander angeordneten Elementen - einer Lichtquelle und einem Zeilensensor - sowie einer zwischen der Lichtquelle und dem Zeilensensor angeordneten Codescheibe, die drehfest mit der Lenkspindel verbunden ist. Als Zeilensensor ist eine CCD-Sensorzeile vorgesehen. Der Codegeber ist als Lichtschlitzscheibe ausgebildet und umfaßt als Codespur eine sich von innen nach außen vergrößernde Spirale. Über die Belichtung der Bildpunkte des Zeilensensors bei einem bestimmten Lenkeinschlag kann ein Aufschluß über den tatsächlichen Lenkwinkeleinschlag gewonnen werden.
Als Codierung ist bei dieser Codescheibe eine sich über 360° erstreckende archimedische Spirale vorgesehen. Mit diesem Lenkwinkelsensor sind absolute Lenkradwinkelstellungen nur im Bereich der Codierung bestimmbar, wodurch sich auch hier die Begrenzung auf den Bereich von 360° ergibt. Lenkräder von Kraftfahrzeugen lassen sich jedoch um weitaus mehr als 360° drehen. Ausgehend von einer Geradeausstellung der Räder und somit einer Nullstellung des Lenkwinkelsensors ist es erwünscht, den Lenkwinkel absolut in einem Winkelbereich zu erfassen, der den gesamten Drehbereich des Lenkrades abdeckt. Bei dem vorbekannten Lenkwinkelsensor ist in diesem Zusammenhang lediglich eine Winkelsegmenterfassung möglich, nämlich - ausgehend von der Nullstellung des Lenkrades - im Bereich eines vollen Lenkradeinschlages von 180° nach rechts und entsprechend von 180° nach links. Lenkräder von Kraftfahrzeugen können sich beispielsweise drei Lenkradumdrehungen nach rechts und entsprechend drei Lenkradumdrehungen nach links - ausgehend von der Nullstellung - bewegen, so daß mit einem absolut messenden Lenkwinkelsensor 2160° erfaßbar sein müßten.

Bekannte Lösungen zu dieser Problematik greifen auf mechanische Elemente zur Erfassung der erfolgten, vollständigen Umdrehungen des Lenkrades zurück. Eine solche mechanische Lösung ist z.B. der DE 196 01 965 A1 zu entnehmen, in der ein optoelektronischer 360°-Sensor beschrieben ist, der mit einem mechanischen Umdrehungszählwerk ergänzt wurde.
Aufgrund des dabei zum Einsatz kommenden, mechanischen Übersetzungsgetriebes verliert man bei einer solchen Lösung aber wieder viele der Vorteile der berührungslosen Sensortechnik, wie z.B. die Verschleißfreiheit und Geräuscharmut.

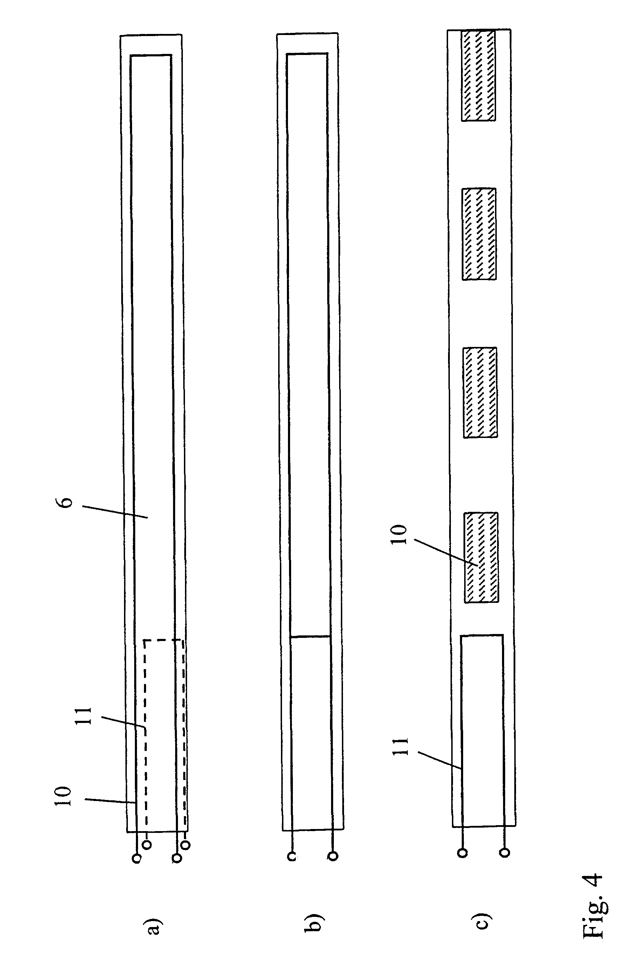

Eine mögliche Lösung mit einem berührungslosen Meßprinzip wird durch die DE 198 35 886 A1 aufgezeigt, in der eine Lenkwinkel-Erfassungsvorrichtung nach dem Oberbegriff der Ansprüche 1 und 6 offenbart ist, bei der die durch eine auf einem in Art einer Uhrfeder zwischen einem Rotor und einem diesen umgebenden Außengehäuse angeordneten, flachen Band aufgebrachten Leiter gebildete, veränderliche Induktivität als Maß für die absolute Winkelstellung des Lenkrades auch über mehrere Umdrehungen hinweg herangezogen ist.
Die Bestimmung einer Induktivität macht jedoch zum einen aufwendige elektronische Meßanordnungen erforderlich, und zum anderen ist, wie die in den Figuren 4 bis 7 dieser Offenlegungsschrift dargestellten Meßergebnisse zeigen, die dort gewählte Methode mit sehr großen Meßwertschwankungen und damit mit erheblichen Ungenauigkeiten in der Angabe des Winkelwertes behaftet.

Demgegenüber liegt der vorliegenden Erfindung die Aufgabe zugrunde, einen Lenkwinkelsensor zum Bestimmen der absoluten Winkelstellung des Lenkrades eines Kraftfahrzeugs vorzuschlagen, der ebenfalls einen über 360° hinausgehenden Meßbereich aufweist und mit einfachen elektronischen Mitteln und ohne zusätzlichen mechanischen Aufwand genauere Meßergebnisse zu erzielen vermag.

Dies gelingt durch den Einsatz einer Meßanordnung mit zumindest einer Spulenanordnung, die mit einer auf /in einem flexiblen Flachband realisierten, elektrisch leitfähigen Struktur kooperiert, wobei das flexible Flachband in einem durch die äußere Mantelfläche eines innenliegenden mit der Lenkspindel verbundenen, zylindrischen Rotors und die innere Mantelfläche eines außenliegenden, mit der Lenksäule verbundenen, zylindrischen Stators begrenzten Wickelspaltes dergestalt aufgewickelt ist, daß sein eines Ende am Rotor und sein anderes Ende am Stator befestigt ist.

In einer ersten Ausführungsform ist dabei ein zwei magnetisch gekoppelte Spulenanordnungen umfassender Übertrager vorgesehen, bei dem eine der Spulenanordnungen durch zumindest eine auf / in dem Flachband sich entlang seiner Längsachse erstreckend ausgeführte Leiterbahn gebildet ist, und die andere Spulenanordnung als zur Induktion einer Meßspannung in der ersten Spulenanordnung vorgesehene, koaxial zum Stator angeordnete und mit diesem mechanisch verbundene Sendespule ausgeführt ist.

Dabei ist vorteilhaft vorgesehen, daß die als Sendespule ausgeführte Spulenanordnung elektrisch mit einem einen Wechselstrom hoher Frequenz erzeugenden Schaltkreis verbunden ist.

Ein besonders einfacher mechanischer Aufbau ergibt sich dadurch, daß die als Sendespule ausgeführte Spulenanordnung mittels auf einer elektrischen Leiterplatte aufgedruckter Leiterbahnstrukturen realisiert ist.

Die Rückführung des Meßsignals von der Rotor- auf die Statorseite erfolgt bei dieser Ausführungsform vorteilhafterweise durch eine kapazitive Kopplung oder über die elektrisch leitfähige Lenkspindel.

In einer weiteren Ausführungsform ist die Spulenfläche der zumindest einen Spulenanordnung parallel zu den Mantelflächen von Stator und Rotor ausgerichtet.

Eine Weiterbildung dieser Ausführungsform sieht vor, daß auch durch die auf / in dem Flachband realisierte Leiterbahnstruktur eine Spulenanordnung gebildet ist, die mit der ersten Spulenanordnung einen Übertrager bildet, wobei der Kopplungsgrad zwischen den beiden Spulenanordnungen durch die Winkelstellung des Lenkrades bestimmt ist.

Eine der beiden Spulenanordnungen kann dabei vorteilhaft z.B. als auf einer Mantelfläche des Stators aufgebrachte elektrisch leitfähige Struktur realisiert sein.

Das Flachband kann dabei so angeordnet sein , daß es spiralförmig mit in jeder Rotorstellung über seine gesamte Länge gleichbleibendem Richtungssinn aufgewickelt ist und in den beiden Endstellungen der Rotordrehung einerseits annähernd vollständig an der äußeren Mantelfläche des Rotors und andererseits annähernd vollständig an der inneren Mantelfläche des Stators anliegt.

Alternativ dazu kann das Flachband aber auch dergestalt aufgewickelt sein, daß in der Mittenstellung des Lenkrades ein Abschnitt desselben in einer Richtung aufgewickelt an der äußeren Mantelfläche des Rotors anliegt, und ein weiterer Abschnitt in der entgegengesetzten Richtung aufgewickelt an der inneren Mantelfläche des Stators anliegt, so daß zwischen den beiden Abschnitten eine die Wickelrichtung umkehrende Schleife gebildet ist.

Besonders bevorzugt ist eine Verwendung einer dieser Vorrichtungen zum Erfassen der Winkelstellung des Lenkrades in einer Lenksäulen-Lenkrad-Einheit, bei welcher zum Übertragen von elektrischem Strom zwischen der Lenksäule als Stator und der Lenkwelle als Rotor eine Wickelfederkassette eingesetzt ist. In einer solchen Wickelfederkassette sind die stromübertragenden Leitungen in einem oder mehreren Flachbandkabeln vereinigt, die in dem durch Rotor und Stator gebildeten Wickelspalt aufgewickelt sind. Neben diesen vorhandenen elektrischen Leiterbahnen können ohne großen Aufwand weitere, für die erfindungsgemäße Erfassung der Winkelstellung des Lenkrades vorgesehene angeordnet werden, falls nicht sogar schon vorhandene Leitungen z.B. durch Trennung und Filterung der Signale im Frequenzbereich zu diesem Zwecke mitgenutzt werden können.

Vorteilhaft ist auch die Verwendung einer der beschriebenen Vorrichtungen in Kombination mit einer weiteren Lenkwinkelerfassungsvorrichtung, die einen gegenüber der vorliegenden Vorrichtung eingeschränkten Meßbereich, dafür aber eine höhere Auflösung aufweist, zur gemeinsamen Bestimmung des Absolutwertes des Lenkwinkels durch eine Grob- und eine Feinbestimmung.

Weitere Ausgestaltungen und zweckmäßige Weiterbildungen des erfindungsgemäßen Gegenstandes sind in den zusätzlichen Unteransprüchen angegeben und gehen auch aus der nachfolgenden Beschreibung der in der Zeichnung wiedergegebenen, schematischen Darstellung der Ausführungsformen der erfindungsgemäßen Vorrichtung hervor.

Dabei zeigen:
- **Fig. 1:**: eine schematische Darstellung einer ersten Ausführungsform der erfindungsgemäßen Lenkwinkelerfassungsvorrichtung im Querschnitt
- **Fig. 2:**: a) eine schematische Darstellung einer weiteren Ausführungsform der erfindungsgemäßen Lenkwinkelerfassungsvorrichtung im Querschnitt
b) einen Schnitt längs AA' durch den in a) dargestellten Gegenstand
- **Fig. 3:**: verschiedene Ausführungen der Leiterbahnstruktur auf dem flexiblen Flachband und/oder auf der Mantelfläche des Stators bei der in Fig. 2 dargestellten Ausführungsform
- **Fig. 4:**: weitere Ausführungen der Leiterbahnstruktur auf dem flexiblen Flachband bei der in Fig. 2 dargestellten Ausführungsform

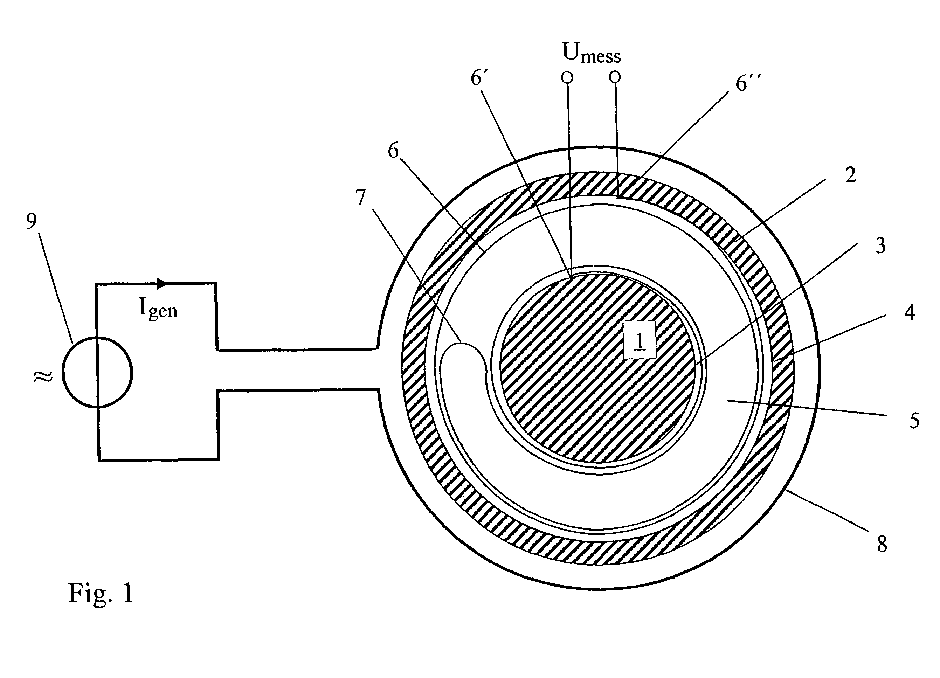

Wie in Fig. 1 zu sehen, sind bei einer ersten Ausführungsform der erfindungsgemäßen Lenkwinkelerfassungsvorrichtung der mit der Lenkspindel verbundene Rotor 1 und der mit der Lenksäule verbundene Stator 2 einer Wickelfederkassette konzentrisch zur Lenkspindel und beabstandet zueinander angeordnet, so daß ein durch die äußere Mantelfläche 3 des innenliegenden Rotors 1 und die innere Mantelfläche 4 des außenliegenden Stators 2 begrenzter Wickelspalt 5 gebildet ist, in welchem ein flexibles, mehrere sich entlang seiner Längsachse erstreckende, elektrische Leiterbahnen aufweisendes Flachband 6 dergestalt aufgewickelt ist, daß sein eines Ende 6' am Rotor 1 und sein anderes Ende 6'' am Stator 2 befestigt und die elektrischen Leiterbahnen, von denen eine für die Zwecke der Lenkwinkelerfassung und die übrigen zur Übertragung von elektrischer Energie und Signalen zwischen Lenksäule und Lenkrad vorgesehen sind, dort kontaktiert sind.
Das Flachband 6 ist dabei so aufgewickelt, daß in der Mittenstellung des Lenkrades ein am rotorseitigen Ende 6' beginnender Abschnitt desselben von dort ausgehend im Uhrzeigersinn aufgewickelt ist und an der äußeren Mantelfläche 3 des Rotors 1 anliegt, dann eine die Wickelrichtung umkehrende Schleife 7 bildet und im weitereren Verlauf einen im Gegenuhrzeigersinn aufgewickelten Abschnitt aufweist, der an der inneren Mantelfläche 4 des Stators 2 anliegt und am statorseitigen Ende 6" endet. Konzentrisch zu der beschriebenen Konfiguration von Rotor 1 und Stator 2 ist eine Sendespule 8 angeordnet, die von einem einen Generator umfassenden Schaltkreis 9 mit einem Wechselstrom I_{gen} hoher Frequenz (im Bereich von ca. 1 bis 10 MHz) gespeist wird. Durch das von diesem Strom erzeugte magnetische Wechselfeld wird in der für die Lenkwinkelerfassung vorgesehenen elektrischen Leiterbahn des Flachbandes 6 eine Spannung Uₘₑₛₛ zwischen den Enden 6' und 6" induziert, die in Phase und Betrag von der Winkelstellung des Rotors 1 abhängig ist. Der Betrag der Spannung nimmt dabei in beiden Endpositionen der Rotordrehung Maximalwerte an, die i.a. unterschiedlich sind; je nach Position der Sendspule können sich die Spannungen in den beiden Endpositionen in der Phase um 180° unterscheiden. Bei Drehung des Rotors von einer Endstellung in die andere nimmt der Betrag der Spannung zunächst unter Beibehaltung der Phase bis auf den Wert 0 ab, um dann mit um 180° geänderter Phase wieder zuzunehmen.

Durch die gleichzeitige Kenntnis von Betrag und Phasenlage der Spannung Uₘₑₛₛ ist deshalb eine eindeutige Kennzeichnung der Winkelstellung des Rotors gegenüber dem Stator bezogen auf den gesamten, mehrere volle Umdrehungen des Rotors umfassenden Drehbereich gegeben.

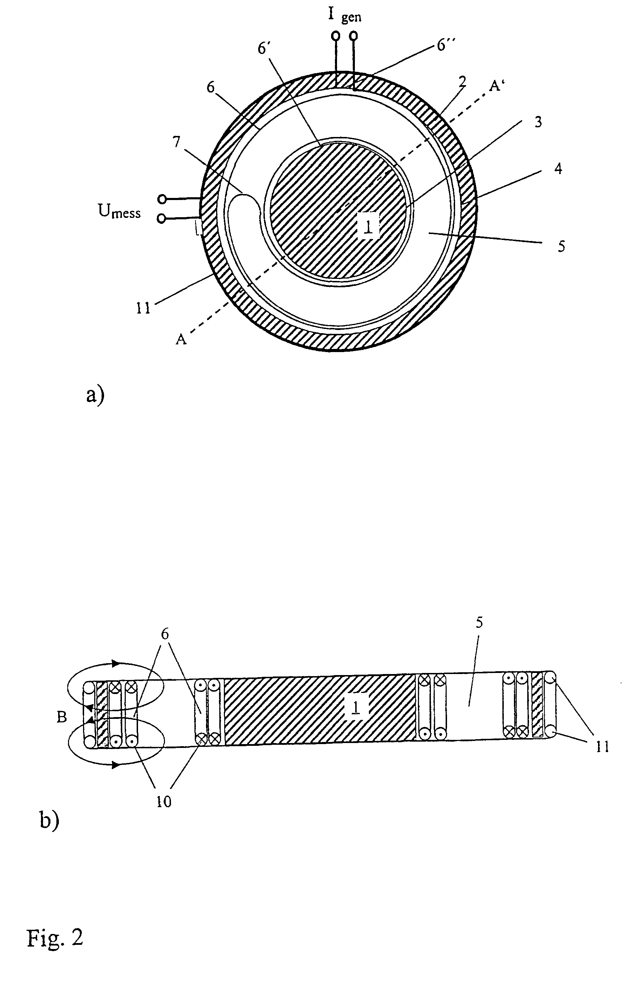

Wie in Fig. 2 a) schematisch dargestellt, sind bei einer anderen Ausführungsform der erfindungsgemäßen Lenkwinkelerfassungsvorrichtung der mit der Lenkspindel verbundene Rotor 1 und der mit der Lenksäule verbundene Stator 2 einer Wickelfederkassette konzentrisch zur Achse der Lenkspindel und beabstandet zueinander angeordnet, so daß ein durch die äußere Mantelfläche 3 des innenliegenden Rotors 1 und die innere Mantelfläche 4 des außenliegenden Stators 2 begrenzter Wickelspalt 5 gebildet ist, in welchem ein flexibles, mehrere sich vorwiegend entlang seiner Längsachse erstreckende, elektrische Leiterbahnstukturen 10 aufweisendes Flachband 6 dergestalt aufgewickelt ist, daß sein eines Ende 6' am Rotor 1 und sein anderes Ende 6" am Stator 2 befestigt ist. Die elektrischen Leiterbahnstrukturen 10 sind, soweit sie für die Zwecke der Lenkwinkelerfassung vorgesehen sind, nur statorseitig elektrisch angeschlossen und am rotorseitigen Ende mit einem Kurzschluß, einem ohmschen Widerstand oder einer Kapazität abgeschlossen, während weitere elektrische Leiterbahnstrukturen, die zur Übertragung von elektrischer Energie und Signalen zwischen Lenksäule und Lenkrad dienen, sowohl auf der Rotorals auch auf der Statorseite elektrisch angeschlossen sind. Das Flachband 6 ist dabei so aufgewickelt, daß in der Mittenstellung des Lenkrades ein am rotorseitigen Ende 6' beginnender Abschnitt desselben von dort ausgehend im Uhrzeigersinn aufgewickelt ist und an der äußeren Mantelfläche 3 des Rotors 1 anliegt, dann eine die Wickelrichtung umkehrende Schleife 7 bildet und im weitereren Verlauf einen im Gegenuhrzeigersinn aufgewickelten Abschnitt aufweist, der an der inneren Mantelfläche 4 des Stators 2 anliegt und am statorseitigen Ende 6" endet. Konzentrisch zu der beschriebenen Konfiguration von Rotor 1 und Stator 2 ist auf der Mantelfläche des Stators 2 eine Spulenanordnung angeordnet.

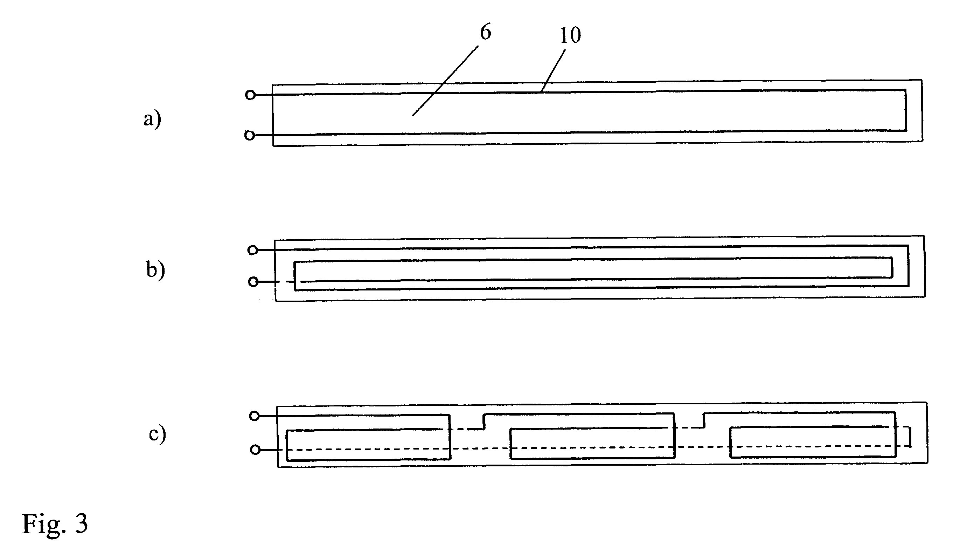

Durch die Leiterbahnstrukturen 10, die auf dem flexiblen Flachband 6 beispielsweise wie in der Fig. 3 a) in der Abwicklung dargestellt angeordnet sind, wird eine Spulenanordnung gebildet, die von einem Generator mit einem Wechselstrom I_{gen} hoher Frequenz (im Bereich von ca. 1 bis 10 MHz) gespeist wird. Durch diesen Strom wird ein magnetisches Wechselfeld erzeugt, das die von dieser Spulenanordnung umgebene, zur Mantelfläche des Stators parallele Fläche im wesentlichen radial durchsetzt, und so in der auf der Mantelfläche des Stators als leitfähige Struktur 11 aufgebrachten, in der Abwicklung ähnlich sich darstellenden zweiten Spulenanordnung eine Spannung Uₘₑₛₛ zwischen deren Enden induziert, deren Betrag von der flächenmäßigen Überdeckung der beiden Spulenanordnungen und somit von der Winkelstellung des Rotors 1 abhängig ist.
Eine Momentaufnahme des Stromflusses sowie des damit verbundenen Magnetfelds ist aus der Fig. 2 b) zu ersehen, wo die Leiterbahnstruktur 10 des flexiblen Leiters 6 sowie die Leiterbahnstruktur 11 der statorseitig festen Spulenanordnung längs einer Linie AA' aus Fig. 2 a) geschnitten dargestellt sind. Die Stromrichtung ist dabei, wie allgemein üblich, durch Kreuze als in die Papierebene eintauchend und durch Punkte als aus der Papierebene austretend dargestellt.
In der in der beschriebenen Betriebsart als Empfangsspule wirkenden Leiterbahnstruktur 11 wird eine Wechselspannung induziert, deren Betrag um so größer wird, je größer der Anteil der als Sendespule wirkenden Leiterbahnstruktur 10 wird, der an der inneren Mantelfläche 4 des Stators und somit in unmittelbarer Nähe der Leiterbahnstruktur 11 zur Anlage kommt. Dieser Anteil wächst aber genau proportional zum Drehwinkel der Lenkspindel - in der in Fig. 2 a) gezeigten Anordnung bei Drehung im Uhrzeigersinn -, so daß eine eindeutige Kennzeichnung der Winkelstellung des Rotors gegenüber dem Stator bezogen auf den gesamten, mehrere volle Umdrehungen des Rotors umfassenden Drehbereich gegeben ist.

In Fig. 3 b) und c) sind beispielhaft weitere mögliche Ausgestaltungen der Leiterbahnstruktur 10 auf dem Flachband bzw. auf der Mantelfläche des Stators dargestellt, die zur Erzielung unterschiedlicher Verläufe der Spannung Uₘₑₛₛ mit dem Drehwinkel der Lenkspindel gewählt werden können. So kann beispielsweise, wie in Fig. 3 b) schematisch angedeutet, zur Vergrößerung des Gesamtsignals die Spulenfläche durch Ausführung mehrerer Windungen vergrößert werden, oder durch eine wie in Fig. 3 c) angedeutet ausgeführte Reihenschaltung mehrerer Einzelspulen eine Winkelbereichsdetektion ermöglicht werden, wobei auch Kombinationen der Unterschiedlichen Konfigurationen auf dem Flachband und dem Stator möglich sind.

Fig. 4 a) zeigt eine Möglichkeit, auch die ortsfest mit dem Stator verbundene Spulenanordnung mit auf dem flexiblen Flachband 6 zu realisieren, und zwar indem dieses um einen Abschnitt in der Länge eines Kreisumfangs verlängert wird, der über den gesamten Lenkraddrehbereich stets in Anlage an der inneren Mantelfläche 4 des Stators bleibt, und auf dem zusätzlich zu der Leiterbahnstruktur 10 z.B. versetzt oder auf der Rückseite des Flachbandes 6 eine die zweite Spulenanordnung bildende Leiterbahnstruktur 11 angeordnet ist.

Fig. 4 b) zeigt eine weitere Ausführungsform der Spulenanordnungen, bei der wie bei der Ausführung nach a) ein Abschnitt des Flachbandes 6 vorgesehen ist, der über den gesamten Lenkraddrehbereich stets in Anlage an der inneren Mantelfläche 4 des Stators bleibt, und an dessen Ende eine Leiterbahnschleife kurzgeschlossen ist, wobei sowohl ein ohmscher (wie hier dargestellt) als auch ein kapazitiver Kurzschluß möglich ist.
Diese Spulenanordnung ist allerdings einer anderen Betriebsart als der bisher besprochenen, bei der eine als Sende- und eine als Empfangsspulenanordnung wirkende Spule vorgesehen ist, zugeordnet. Diese andere Betriebsart ist hingegen dadurch gekennzeichnet, daß nur eine, und zwar die mit dem Kurzschluß (ohmsch oder kapazitiv) abgeschlossene kurze Spulenanordnung aktiv betrieben wird, z.B. als Teil eines Resonanzkreises, während der übrige Teil der Spulenanordnung nur als passives Element wirkt, das in diesem Falle z.B. eine winkelabhängige Bedämpfung des Resonanzkreises bewirkt.
Als passives Element zur Bedämpfung des Resonanzkreises wirkt im übrigen auch jegliches leitfähige Material, das in die unmittelbare Nähe der aktiv betriebenen Spulenanordnung gebracht wird, und zwar durch die in diesem erzeugten Wirbelströme, so daß auch dieser Effekt gezielt eingesetzt werden kann, indem z.B. eine Ausführung der elektrisch leitfähigen Struktur 10 auf dem Flachband 6 wie in Fig. 4 c) dargestellt gewählt wird, oder indem die Wirkung weiterer auf dem gleichen oder einem weiteren Flachband vorhandener Leiterbahnen ausgenutzt wird.
Die Betriebsart mit einem nur passiv wirkenden Element ist im übrigen selbstverständlich auch bei Kombinationen mit den anderen, zuvor besprochenen Spulenanordnungen möglich.

## Patentansprüche

1. Vorrichtung zum Erfassen der Winkelstellung des an der Lenkspindel eines Kraftfahrzeugs befestigten Lenkrades, eine sogenannte, Lenkwinkelerfassungsvorrichtung, mit einem mit der Lenkspindel verbundenen und konzentrisch zu dieser angeordneten, zylindrischen Rotor (1) und einem mit der Lenksäule verbundenen, ebenfalls konzentrisch zur Lenkspindel angeordneten, zylindrischen Stator (2), wobei ein flexibles Flachband (6) in einem durch die äußere Mantelfläche (3) des innenliegenden Rotors (1) und die innere Mantelfläche (4) des dazu beabstandet angeordneten, außenliegenden Stators (2) begrenzten Wickelspalt (5) dergestalt aufgewickelt ist, daß sein eines Ende (6') am Rotor (1) und sein anderes Ende (6") am Stator (2) befestigt ist, **gekennzeichnet durch** einen zwei magnetisch gekoppelte Spulenanordnungen umfassenden Übertrager, wobei eine der beiden Spulenanordnungen **durch** zumindest eine auf oder in dem Flachband (6) sich entlang seiner Längsachse erstreckend ausgeführte Leiterbahn gebildet ist, und die andere Spulenanordnung (8) als zur Induktion einer Meßspannung in der ersten Spulenanordnung vorgesehene, koaxial zum Stator (2) und mit ihrer Spulenfläche senkrecht zur Drehachse des Rotors (1) angeordnete und mit diesem mechanisch verbundene Sendespule ausgeführt ist.

2. Lenkwinkelerfassungsvorrichtung nach Anspruch 1, **dadurch gekennzeichnet, daß** die als koaxial zum Stator angeordnete Sendespule ausgeführte Spulenanordnung (8) elektrisch mit einem einen Wechselstrom hoher Frequenz erzeugenden Schaltkreis (9) verbunden ist.

3. Lenkwinkelerfassungsvorrichtung nach Anspruch 1 oder 2, **dadurch gekennzeichnet, daß** die als koaxial zum Stator angeordnete Sendespule ausgeführte Spulenanordnung (8) mittels auf einer elektrischen Leiterplatte aufgedruckter Leiterbahnstrukturen realisiert ist.

4. Lenkwinkelerfassungsvorrichtung nach einem der Ansprüche 1 bis 3, **dadurch gekennzeichnet, daß** eine kapazitive Rückführung des Meßsignals von der Rotor- auf die Statorseite vorgesehen ist.

5. Lenkwinkelerfassungsvorrichtung nach einem der Ansprüche 1 bis 3, **dadurch gekennzeichnet, daß** eine Rückführung des Meßsignals von der Rotor- auf die Statorseite über die elektrisch leitfähige Lenkspindel vorgesehen ist.

6. Vorrichtung zum Erfassen der Winkelstellung des an der Lenkspindel eines Kraftfahrzeugs befestigten Lenkrades, eine sogenannte Lenkwinkelerfassungsvorrichtung, mit einem mit der Lenkspindel verbundenen und konzentrisch zu dieser angeordneten, zylindrischen Rotor (1) und einem mit der Lenksäule verbundenen, ebenfalls konzentrisch zur Lenkspindel angeordneten, zylindrischen Stator (2), wobei ein flexibles Flachband (6) in einem durch die äußere Mantelfläche (3) des innenliegenden Rotors (1) und die innere Mantelfläche (4) des dazu beabstandet angeordneten, außenliegenden Stators (2) begrenzten Wickelspalt (5) dergestalt aufgewickelt ist, daß sein eines Ende (6') am Rotor (1) und sein anderes Ende (6'') am Stator (2) befestigt ist, **gekennzeichnet durch** zumindest eine mit ihrer Spulenfläche koaxial zu den Mantelflächen (3, 4) des Rotors und des Stators ausgerichteten Spulenanordnung, die mit einer auf oder in dem Flachband (6) realisierten elektrisch leitfähigen Struktur (10) kooperiert.

7. Lenkwinkelerfassungsvorrichtung nach Anspruch 6, **dadurch gekennzeichnet, daß** die elektrisch leitfähige Struktur (10) auf oder in dem Flachband (6) ebenfalls als eine mit ihrer Spulenfläche parallel zu den Mantelflächen (3, 4) der zylindrischen Körper (1, 2) ausgerichtete Spulenanordnung ausgebildet ist, die mit der ersten Spulenanordnung einen Übertrager bildet, wobei der Kopplungsgrad zwischen den beiden Spulenanordnungen durch die Winkelstellung des Lenkrades bestimmt ist.

8. Lenkwinkelerfassungsvorrichtung nach Anspruch 6 oder 7, **dadurch gekennzeichnet, daß** die erste Spulenanordnung durch eine ortsfest mit dem Stator (2) verbundene Leiterbahnstruktur (11) gebildet ist.

9. Lenkwinkelerfassungsvorrichtung nach Anspruch 8, **dadurch gekennzeichnet, daß** die als ortsfest mit dem Stator verbundene Leiterbahnstruktur (11) ausgeführte Spulenanordnung mittels einer auf einer Mantelfläche des Stators (2) aufgebrachten, elektrisch leitfähigen Struktur realisiert ist.

10. Lenkwinkelerfassungsvorrichtung nach Anspruch 6 oder 7, **dadurch gekennzeichnet, daß** die erste Spulenanordnung durch eine ebenfalls auf oder in dem Flachband (6) angeordnete Leiterbahnstruktur (11) gebildet ist, die elektrisch von der anderen Leiterbahnstruktur (10) auf oder in dem Flachband (6) isoliert ist.

11. Lenkwinkelerfassungsvorrichtung nach Anspruch 7, **dadurch gekennzeichnet, daß** die beiden Spulenanordnungen durch eine nach einer Umfangslänge ohmsch oder kapazitiv kurzgeschlossene Leiterbahnsschleife auf oder in dem Flachband (6) gebildet sind.

12. Lenkwinkelerfassungsvorrichtung nach einem der Ansprüche 6 bis 11, **dadurch gekennzeichnet, daß** die zumindest eine Spulenanordnung einen Teil eines mit einem Wechselstrom hoher Frequenz betriebenen Resonanzkreises bildet und die auf oder in dem Flachband (6) realisierte elektrisch leitfähige Struktur (10) elektrisch nicht kontaktiert ist.

13. Lenkwinkelerfassungsvorrichtung nach einem der Ansprüche 7 bis 10, **dadurch gekennzeichnet, daß** eine der beiden Spulenanordnungen mit einem Sende- und die andere Spulenanordnung mit einem Empfangsschaltkreis verbunden ist, wobei die Sende- und Empfangsschaltkreise statorseitig angeordnet sind.

14. Lenkwinkelerfassungsvorrichtung nach Anspruch 13, **dadurch gekennzeichnet, daß** der Sendeschaltkreis einen Wechselstrom hoher Frequenz erzeugt.

15. Lenkwinkelerfassungsvorrichtung nach einem der Ansprüche 1 bis 14, **dadurch gekennzeichnet, daß** das Flachband (6) dergestalt aufgewickelt ist, daß in der Mittenstellung des Lenkrades ein Abschnitt desselben in einer Richtung aufgewickelt an der äußeren Mantelfläche (3) des Rotors (1) anliegt, und ein weiterer Abschnitt in der entgegengesetzten Richtung aufgewickelt an der inneren Mantelfläche (4) des Stators (2) anliegt, so daß zwischen den beiden Abschnitten eine die Wickelrichtung umkehrende Schleife (7) gebildet ist.

16. Lenkwinkelerfassungsvorrichtung nach einem der Ansprüche 1 bis 14, **dadurch gekennzeichnet, daß** das Flachband (6) spiralförmig mit in jeder Rotorstellung über seine gesamte Länge gleichbleibendem Richtungssinn aufgewickelt ist und in den beiden Endstellungen der Rotordrehung einerseits annähernd vollständig an der äußeren Mantelfläche (3) des Rotors (1) und andererseits annähernd vollständig an der inneren Mantelfläche (4) des Stators (2) anliegt.

17. Lenkwinkelerfassungsvorrichtung nach einem der Ansprüche 1 bis 16, wobei neben den für die Erfassung der Winkelstellung des Lenkrades vorgesehenen elektrischen Leiterbahnstrukturen zumindest eine weitere elektrische Leiterbahn zum Übertragen von elektrischem Strom zwischen Stator (2) und Rotor (1) auf demselben Flachband und/oder weiteren Flachbändern angeordnet ist oder sind.

18. Verwendung einer Vorrichtung nach einem der Ansprüche 1 bis 17 in Kombination mit einer weiteren Lenkwinkelerfassungsvorrichtung, die einen gegenüber der vorliegenden Vorrichtung eingeschränkten Meßbereich, dafür aber eine höhere Auflösung aufweist, zur gemeinsamen Bestimmung des Absolutwertes des Lenkwinkels durch eine Grob- und eine Feinbestimmung.

## Claims

1. Facility for sensing the angular position of the steering wheel mounted on the steering shaft of a motor vehicle, a so-called steering angle sensing facility, with a cylindrical rotor (1) attached to the steering shaft and arranged concentric with the same and with a cylindrical stator (2) connected to the steering column and also arranged concentric to the steering shaft in which, in a winding gap (5) bounded by the exterior enclosure surface (3) of the innerlying rotor (1) and the interior enclosure surface (4) of the outer-lying stator (2) positioned at a distance to the former, a flexible ribbon (6) is wound in such a way that its one end (6') is fastened to the rotor (1) and its other end (6") is fastened to the stator (2), **characterized by** a transformer comprising two magnetically coupled coil arrangements, with one of the two coil arrangements formed by at least one printed conductor realized on or in the ribbon (6) and extending along its longitudinal axis and the other coil arrangement (8) realized as a transmitting coil which is provided for inducing a measuring voltage in the first coil arrangement and is arranged coaxially to the stator (2) with its coil surface vertical to the rotational axis of the rotor (1) and is connected mechanically to the stator (2).

2. Steering angle sensing facility in accordance with Claim 1, **characterized by** the fact that the coil arrangement (8) realized as a transmitting coil arranged coaxially to the stator is electrically connected to a switching circuit (9) which generates an alternating current of high-frequency.

3. Steering angle sensing facility in accordance with Claim 1 or 2, **characterized by the fact that** that the coil arrangement (8) realized as a transmitting coil arranged coaxially to the stator is accomplished by means of printed conductor structures printed on an electric printed circuit board.

4. Steering angle sensing facility in accordance with any one of Claims 1 to 3, **characterized by** the fact that a capacitive feedback of the measuring signal from the rotor side to the stator side is provided.

5. Steering angle sensing facility in accordance with any one of Claims 1 to 3, **characterized by** the fact that a feedback of the measuring signal from the rotor side to the stator side is provided by way of the electroconductive steering shaft.

6. Facility for sensing the angular position of the steering wheel mounted on the steering shaft of a motor vehicle, a so-called steering angle sensing facility, with a cylindrical rotor (1) attached to the steering shaft and arranged concentric with the same and with a cylindrical stator (2) connected to the steering column and also arranged concentric to the steering shaft in which, in a winding gap (5) bounded by the exterior enclosure surface (3) of the innerlying rotor (1) and the interior enclosure surface (4) of the outer-lying stator (2) positioned at a distance to the former, a flexible ribbon (6) is wound in such a way that its one end (6') is fastened to the rotor (1) and its other end (6") is fastened to the stator (2), **characterized by** at least one coil arrangement whose coil surface is coaxially aligned to the enclosure surfaces (3,4) of the rotor and the stator and which cooperates with an electroconductive structure (10) realized on or in the ribbon (6).

7. Steering angle sensing facility in accordance with Claim 6, **characterized by** the fact that the electroconductive structure (10) on or in the ribbon (6) is likewise designed as a coil arrangement which is aligned with its coil surface parallel to the enclosure surfaces (3,4) of the cylindrical members (1,2) and which together with the first coil arrangement constitutes a transformer with the coupling factor between the two coil arrangements being determined by the angular position of the steering wheel.

8. Steering angle sensing facility in accordance with Claim 6 or 7, **characterized by** the fact that the first coil arrangement is formed by means of a printed conductor structure (11) which is permanently connected to the stator (2).

9. Steering angle sensing facility in accordance with Claim 8, **characterized by** the fact that the coil arrangement executed as a printed conductor structure (11) which is permanently connected to the stator is realized by means of an electroconductive structure applied to an enclosure surface of the stator (2).

10. Steering angle sensing facility in accordance with Claim 6 or 7, **characterized by the fact that** the first coil arrangement is formed by a printed conductor structure (11) likewise arranged on or in the ribbon (6) and is electrically isolated from the other printed conductor structure (10) on or in the ribbon (6).

11. Steering angle sensing facility in accordance with Claim 7, **characterized by** the fact that the two coil arrangements are formed by a conductor loop on or in the ribbon (6) which is ohmically or capacitively short-circuited after one circumferential length.

12. Steering angle sensing facility in accordance with any one of Claims 6 to 11, **characterized by** the fact that at least one coil arrangement forms part of a resonant circuit with an alternating current of high frequency and the electroconductive structure (10) realized on or in the ribbon (6) is not electrically contacted.

13. Steering angle sensing facility in accordance with any one of Claims 7 to 10, **characterized by** the fact that one of the two coil arrangements is connected to a transmitting circuit and the other coil arrangement is connected to a receiving circuit, in which the transmitting and receiving circuits are arranged on the stator side.

14. Steering angle sensing facility in accordance with Claim 13, **characterized by** the fact that the transmitting circuit generates an alternating current of high frequency.

15. Steering angle sensing facility in accordance with any one of Claims 1 to 14, **characterized by the fact that** the ribbon (6) is wound in such a way that, when the steering wheel is in its centreline position, a section of the ribbon is wound in one direction abutting on the exterior enclosure surface (4) of the rotor (1) and a further section is wound in the opposing direction abutting on the interior enclosure surface (4) of the stator (2) so that a loop (7) is formed between the two sections which reverses the direction of winding.

16. Steering angle sensing facility in accordance with any one of Claims 1 to 14, **characterized by** the fact that the ribbon (6) is wound helically with a consistent sense of direction over its entire length in every rotor position, and in the two end positions of the revolution of the rotor abuts almost completely on the exterior enclosure surface (3) of the rotor (1) on the one hand and almost completely on the interior enclosure surface (4) of the stator (2) on the other hand.

17. Steering angle sensing facility in accordance with any one of Claims 1 to 16 in which, besides the electric conductor structures provided for sensing the angular position of the steering wheel, at least one further electric conductor is or are arranged on the same ribbon and/or further ribbons for conveying electric current between stator (2) and rotor (1).

18. Application of a facility in accordance with any one of Claims 1 to 17 in combination with a further steering angle sensing facility which features a restricted measuring range in comparison with the facility described here, but on the other hand has a higher resolution for jointly determining the absolute value of the steering angle by means of a coarse and a fine determination.

## Revendications

1. Dispositif de détection de l'angle de braquage d'un volant fixé à l'arbre de direction d'un véhicule automobile, dit dispositif de saisie de l'angle de direction, lequel dispositif comprend un rotor (1) cylindrique, relié à l'arbre de direction et disposé concentriquement par rapport à celui-ci, et un stator (2) cylindrique, relié à la colonne de direction et disposé également concentriquement par rapport à celle-ci, un ruban plat flexible (6) étant enroulé dans un interfer (5), qui est limité par la surface externe (3) du manteau du rotor (1), disposé vers l'intérieur, et la surface interne (4) du manteau du stator (2), disposé vers l'extérieur, à distance l'un de l'autre, de sorte que l'une des extrémités (6') dudit ruban plat se trouve fixée au rotor (1) et l'autre extrémité (6") fixée au stator (2), **caractérisé par** un translateur qui comprend deux agencements de bobine couplés magnétiquement, l'un desdits agencements de bobine étant formé par au moins une piste conductive, réalisée sur ou dans un ruban plat (6) et s'étendant le long de l'axe longitudinal de celui-ci et l'autre agencement de bobine (8) étant exécuté en tant que bobine émettrice destinée à induire une tension de mesure dans le premier agencement de bobine et disposée coaxialement par rapport au stator (2) auquel elle est reliée mécaniquement et la surface de ladite bobine étant disposée perpendiculairement à l'axe de rotation du rotor (1).

2. Dispositif de détection de l'angle de braquage selon la revendication 1, **caractérisé en ce que** l'agencement de bobine (8), exécuté en tant que bobine émettrice, disposée coaxialement par rapport au stator, est électriquement relié à un circuit de commutation (9) qui génère un courant alternatif de fréquence élevée.

3. Dispositif de détection de l'angle de braquage selon la revendication 1 ou 2, **caractérisé en ce que** l'agencement de bobine (8), exécuté en tant que bobine émettrice, disposée coaxialement par rapport au stator, est réalisé par des circuits imprimés sur une plaquette de conduction électrique.

4. Dispositif de détection de l'angle de braquage selon l'une des revendications 1 à 3, **caractérisé en ce qu'**une rétroaction capacitive du signal de mesure du côté rotor au côté stator est prévue.

5. Dispositif de détection de l'angle de braquage selon l'une des revendications 1 à 3, **caractérisé en ce qu'**une rétroaction du signal de mesure est prévue, du côté rotor au côté stator, par l'intermédiaire de l'arbre de direction conducteur au niveau électrique.

6. Dispositif de détection de l'angle de braquage d'un volant fixé à l'arbre de direction d'un véhicule automobile, dit dispositif de saisie de l'angle de direction, lequel comprend un rotor (1) cylindrique, relié à l'arbre de direction et disposé concentriquement par rapport à celui-ci, et un stator (2) cylindrique, relié à la colonne de direction et disposé également concentriquement par rapport à cette dernière, un ruban plat flexible (6) étant enroulé dans un interfer (5), qui est limité par la surface externe (3) du manteau du rotor (1), disposé vers l'intérieur, et la surface interne (4) du manteau du stator (2), disposé vers l'extérieur, à distance l'un de l'autre, de sorte que l'une (6') des extrémités dudit ruban plat se trouve fixée au rotor (1) et l'autre extrémité (6") fixée au stator (2), **caractérisé par**, au moins, un agencement de bobine dont la surface est orientée coaxialement, par rapport aux surfaces (3, 4) du manteau respectif du rotor et du stator, ledit agencement de bobine coopérant avec une structure conductible (10) qui est réalisée sur ou dans un ruban plat (6).

7. Dispositif de saie de l'angle de braquage selon la revendication 6, **caractérisé en ce que** la structure conductible (10) est conçue sur ou dans le ruban plat (6) également en tant qu'agencement de bobine avec surface orientée parallèlement aux surfaces (3, 4) du manteau respectif des corps cylindriques (1, 2), et forme un translateur avec le premier agencement de bobine, le degré de couplage entre les deux agencements de bobines étant déterminé par la position angulaire du volant.

8. Dispositif de saie de l'angle de braquage selon la revendication 6 ou 7, **caractérisé en ce que** le premier agencement de bobine est formé par une structure de pistes conductives (11) qui est reliée, stationnairement, au stator (2).

9. Dispositif de saie de l'angle de braquage selon la revendication 8, **caractérisé en ce que** l'agencement de bobine, exécuté en forme de structure de pistes conductives (11), reliées stationnairement au stator, est réalisé à l'aide d'une structure conductible qui est appliquée sur une surface du manteau du stator (2).

10. Dispositif de saisie de l'angle de braquage selon la revendication 6 ou 7, **caractérisé en ce que** le premier agencement de bobine est formé par une structure de pistes conductives (11) qui, également disposée sur ou dans le ruban plat (6), est isolée au niveau électrique, sur ou dans le ruban plat (6), de l'autre structure de pistes conductives (10).

11. Dispositif de saisie de l'angle de braquage selon la revendication 7, **caractérisé en ce que** les deux agencements de bobine forment, sur ou dans le ruban plat (6), une boucle de pistes conductives courcircuitée au niveau ohmique ou capacitif, après une longueur

12. Dispositif de saisie de l'angle de braquage selon l'une des revendications 6 à 11, **caractérisé en ce que** l'un des agencements de bobines, au moins, forme une partie d'un circuit de résonnance, exploité au courant alternatif à haute fréquence, et que la structure conductible(10), réalisée sur ou dans le ruban plat (6) n'est pas contactée électriquement.

13. Dispositif de saisie de l'angle de braquage selon l'une des revendications 7 à 10, **caractérisé en ce que** l'un des deux agencements de bobines est relié à un agencement émetteur et à l'autre agencement de bobine, avec un circuit de commutation récepteur, les circuits émetteur et récepteur étant disposés du côté stator.

14. Dispositif de saisie de l'angle de braquage selon la revendication 13, **caractérisé en ce que** le circuit de commutation émetteur génère un courant alternatif à haute fréquence.

15. Dispositif de saisie de l'angle de braquage selon l'une des revendications 1 à 14, **caractérisé en ce que** le ruban plat (6) est enroulé en sorte qu'une partie dudit ruban, enroulée dans un sens, porte contre la surface externe (3) du manteau du rotor (1) et une autre partie, enroulée dans le sens opposé, porte contre la surface interne (4) du manteau du stator (2) quand le volant est en position centrale, une boucle (7), qui renverse le sens de bobinage, étant ainsi formée entre les deux parties.

16. Dispositif de saisie de l'angle de braquage selon l'une des revendications 1 à 14, **caractérisé en ce que** le ruban plat (6) est enroulé en spirale, dans un sens demeurant le même sur toute sa longueur, quelle que soit la position du rotor et porte, dans les deux positions finales de rotation dudit rotor, presque complètement contre la surface externe du manteau du rotor, d'une part, et presque complètement contre la surface interne du manteau du stator, d'autre part. Neben den für die Erfassung der WE

17. Dispositif de saisie de l'angle de braquage selon l'une des revendications 1 à 16, une autre piste conductive, au moins, étant, outre les structures de pistes conductives électriques, prévues pour la saisie de la position de braquage du volant, disposée, sur le même ruban plat et / ou sur d'autres rubans, en vue du transfert du courant électrique, entre le stator (2) et le rotor (1).

18. Utilisation d'un dispositif selon les revendications 1 à 17, combiné avec un autre dispositif de détection de l'angle de braquage dont la plage de mesure est plus limitée mais la résolution plus élevée que celles de l'objet de la présente invention, cette combinaison ayant pour but de déterminer en commun la valeur absolue de l'angle de braquage par détection grossière et détection précise.
